# EUROPEAN PATENT APPLICATION

(11) **EP 2 250 905 A1**
(43) Date of publication of application: **17.11.2010**
(21) Application number: 09425238.4
(22) Date of filing: 22.06.2009
(51) Int. Cl.: A22C 17/02, A47J 43/18

(54) **Gripping tool for meat**

(30) Priority: 14.05.2009 IT MN20090011
(71) Applicant: Novellini, Gianni, 46042 Castel Goffredo (MN) (IT)
(72) Inventor: Novellini, Gianni, 46042 Castel Goffredo (MN) (IT)
(74) Representative: Petazzi, Guido

(57) **Abstract**

The present invention relates to a gripping tool for meat of the type comprising a couple of half-parts (2 and 3) envisaged to mutually couple so as to create a space in which to house a block of meat which must be sliced, in which the first half-part (2) is essentially composed of a first prop (20) equipped with a plurality of teeth (21), which have one end secured irremovably to the said prop and the other end free and slightly arched at the terminal part so as not to pierce the surface on which one is working and to adhere better to the conformation of the meat, and a handgrip (23) engaged in a rotary fashion to the first prop (20) and constituted of a section of a hollow tubular element, endowed with a series of holes (24) located at equal intervals from one another.

The second half-part (3) is essentially composed of a second prop (30) with a plurality of teeth (31) which have one end secured irremovably to the said prop and the other end free and slightly arched, and a handgrip (33) engaged in a rotary fashion to the second prop (30) and constituted of a section of a tubular element which is also hollow and has a suitable section to house the handgrip (23) therein.

The gripping tool is designed to switch from a resting condition, in which it is inactive and the two half-parts are mutually separate, featuring the teeth positioned parallel to the handgrip, to a first operational condition in which the two half-parts are mutually secured by means of a hook, and to a second operational condition, in which a piece of meat to slice is held by the tool.

## Description

The present invention relates to a gripping tool for meat particularly indicated for holding roasts, salami, large sausages and other blocks of meat that have to be sliced.

As is known, often in cooking, when one wants to cook a block of meat such as, for example, a roast or a braised meat, one trusses it with a specific thread so that the meat does not open up during cooking, losing its original cylindrical form. Once the cooking is finished, the roast must be sliced in order to be able to suitably present and serve it at the table, therefore, one unties it to prevent there being remains of thread, which are unattractive and dangerous if inadvertently swallowed, but the meat still needs to be kept bound to prevent it opening up and ruining the conformation of the single slices.

The operation to cut the slices of meat, while apparently very simple in practice, is a nightmare for the cook, since it is difficult to manage to cut slices which are regular and uniform in terms of thickness without them breaking, especially when the meat is hot.

In particular, to prevent the slice of roast crumbling while cutting it, one tends to slice the roast when the meat is cold, but even in these conditions, things are not much better and it is not always possible to wait for the meat to cool.

Furthermore, to keep the piece of meat still, one usually uses a large fork, which is inserted into the meat, and one proceeds with the cutting with a knife. It has been found that the large fork can hold the piece of meat quite still, but often one manages to ruin the slice by piercing the meat and, if the roast is stuffed, making the stuffing come out, thus deforming the slices.

At present, there are tongs for roasts available on the market for holding meat to slice, whose task is to hold the meat in position in order to be able to cut it without piercing it.

A first type of tongs is composed of a U-shaped element, one end of which ends with two fork-like prongs while the other end features a widened slice or spoon-like portion and the curvature of the U is sprung so as to allow the element to widen to fit the block of meat therein and hold it so that the person can cut the slices with the other hand.

The tongs just described, while managing to hold the meat, do not allow the entire block to be held effectively and do not help to realise uniform and homogeneous slices since the thickness of the slices depends solely on the experience and expertise of the person carrying out the said operation.

A second type of tongs on the market is constituted of two mutually hinged claws in which each claw is composed of a handgrip and a portion endowed with a series of mutually parallel teeth positioned on the opposite side of the handgrip to the hinge. In more detail, the teeth of the tongs can be arched so as to create a rounded housing in order to follow the circular profile of the roast or angled in order to create a rhomboidal space to house the meat.

The tongs just outlined have also brought to light a series of drawbacks which limit the practicality and functionality thereof.

A first drawback is derived from the fact that since the two claws are mutually hinged, they have a limited opening range and therefore only medium-sized or small roasts can be housed therein. What is more, when the roast is fitted, the two handgrips are mutually spaced, therefore it proves extremely inconvenient and difficult to grip the tongs and hold them well and, consequently, hold the roast still.

A further drawback found emerges from the fact that the distance between the teeth is contained and the thickness of the slice is practically obligatory and is quite thin, therefore one does not always manage to cut entire slices since the meat tends to break and open up, especially if one has to cut, for example, a rolled or stuffed roast. When the slices of meat break or are not regular, the presentation of the food on the plate suffers therefrom considerably.

A further drawback derives from the fact that the tongs feature a certain size, therefore they occupy space in a drawer, proving bulky and scarcely practical to store and also inconvenient to clean.

The aim of the present invention is essentially to solve the problems of the commonly known technique by overcoming the aforesaid difficulties by means of a gripping tool for meat able to offer great ease of use and an excellent hold on the meat, thereby resulting in regular and uniform slices.

A further aim of the present invention is to realise a gripping tool for meat which is adjustable so as to house even a notably sized piece of meat and which allows the user to obtain a firm hold on the piece of meat without the need to exert force.

A further aim of the present invention is to realise a gripping tool for meat which is easily stored due to its extremely contained overall dimensions.

A last but not final aim of the present invention is to realise a gripping tool for meat which is easy to manufacture and works well.

These aims and others besides, which will better emerge over the course of the present description, are essentially achieved by means of a gripping tool for meat, as outlined in the claims below.

Further characteristics and advantages will better emerge in the detailed description of a gripping tool for meat according to the present invention, provided in the form of a non-limiting example, with reference to the accompanying drawings, in which:
- figure 1 shows, schematically and from a perspective view, a gripping tool for meat according to the present invention in the operational condition;
- figure 2 shows, schematically and from a perspective view, a first component of the tool in figure 1;
- figure 3 shows, schematically and from a perspective view, a second component of the tool in figure 1.

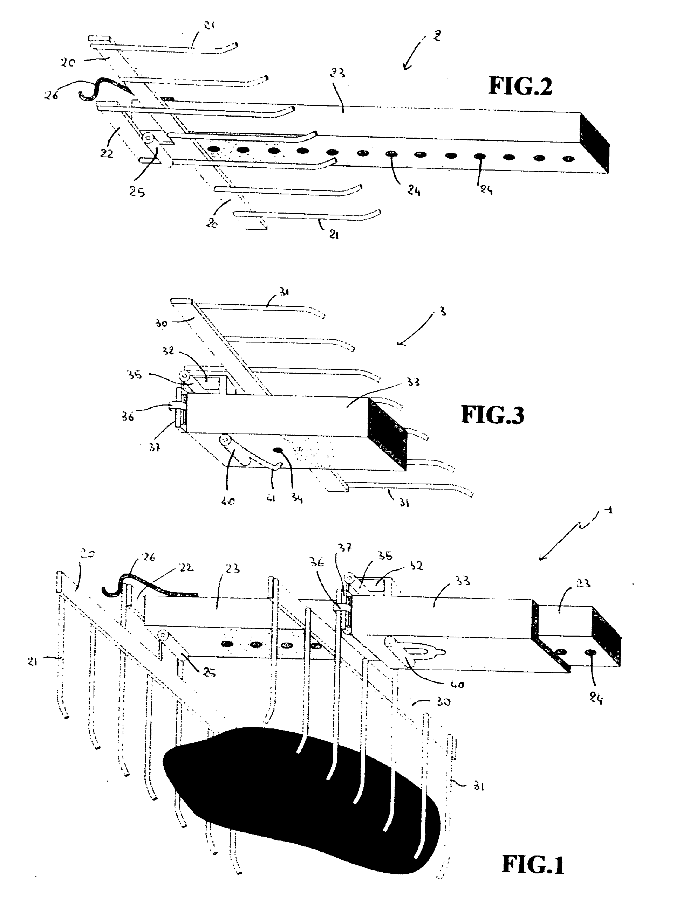

With reference to the aforesaid figures, and in particular to figure 1, 1 denotes a gripping tool for meat as a whole, according to the present invention.

The gripping tool for meat 1 in question is essentially constituted of a couple of half-parts 2 and 3 envisaged to mutually couple so as to create a space in which to house a block of meat which must be sliced.

In greater detail and as shown in figure 2, the first half-part 2 is essentially composed of a first prop 20 envisaged to house a plurality of teeth 21 positioned reciprocally equidistant, which have one end secured irremovably to the prop 20 and the other end free and slightly arched at the terminal part in order not to pierce the surface on which one is working and to adhere better to the configuration of the meat. Connected to the first prop 20 is a first support 22 on the extension of two teeth 21, whose function will be outlined later.

Moreover, the first prop 20 is engaged, in a rotary fashion, to a handgrip 23 constituted, in the present embodiment, of a section of a hollow tubular element endowed with a series of holes 24 located at equal intervals from one another.

As mentioned earlier, the handgrip 23 is connected to the first prop 20 by means of a hinge 25 which allows the first half-part 2 to have much more contained overall dimensions when it is in the resting condition as the teeth 21 are arranged parallel to the handgrip, while when the first half-part 2 is in the operational condition the teeth 21 are located orthogonally with respect to the handgrip 23. In particular, the orthogonal position is maintained due to the presence of a clamping element 26 which mutually secures and locks the first support 22 and the handgrip 23, as shown in figure 1.

According to the present embodiment, the second half-part 3 is essentially composed of a second prop 30 envisaged to house a plurality of teeth 31 positioned reciprocally equidistant, which have one end
secured irremovably to the prop 30 and the other end free and slightly arched, as shown in figure 3.

Connected to the second prop 30 is a small support 32, which is also on the extension of two teeth 31.

Also in this case, engaged in a rotary fashion with the second prop 30 is a handgrip 33 constituted of a section of a hollow tubular element whose section is suitable to house the handgrip 23 therein. Furthermore, the handgrip 33 features an opening 34, whose function will better emerge in the description that follows.

As in the first half-part 2, the handgrip 33 is connected to the second prop 30 via a hinge 35 which allows the second half-part 3 to have extremely contained overall dimensions when in the resting condition since the teeth 31 are arranged parallel to the handgrip 33, while when the second half-part 3 is in the operational condition the teeth 31 are positioned orthogonally with respect to the handgrip 33. In this case, the orthogonal position is obtained due to the presence of a securing element 36 which mutually engages and locks the small support 32 and the handgrip 33, as shown in figure 1.

In agreement with the present embodiment, the handgrip 33 on the second half-part 3 is equipped with a hook 40 equipped with a pin 41 which is envisaged to enter the opening 34 until it intercepts and enters a hole 24 in the first handgrip 23 to mutually secure the two half-parts 2 and 3. The tool can be equipped with a securing unit designed to lock any possible movement of the hook 40 when the tool is in the operational condition.

In addition to the above, the handgrip 33 features a striker plate 37 whose task is to house, in a resting fashion, the extension of the teeth so as to reciprocally join the second prop 30 and the handgrip 33 orthogonally by means of the securing element 36.

In agreement with the present invention, the security for the orthogonal positioning of each half-part 2 and 3 can be obtained by means of a hook with a magnet or by means of another locking system which is able to hold the handgrip in position with respect to the prop.

The tool according to the present invention is realised with steel, aluminium or even a suitably resistant plastic material.

The gripping tool for meat 1 according to the present invention is designed to switch from a resting condition, in which it is inactive and the two half-parts are mutually separate and featuring the teeth positioned parallel to the handgrip, to a first operational condition in which the two half-parts are mutually secured, and to a second operational condition in which a piece of meat to be sliced is held by the tool.

After the predominantly structural description above, the operation of the invention in question will now be outlined.

When one wishes to firmly hold, for example, a roast or any other piece of meat, whether hot or cold, in order to be able to easily cut it into slices, a user must simply move each half-part from the resting position, in which the teeth are parallel to the respective handgrip, to the operational condition, in which the teeth are orthogonal to the handgrip and secured so they cannot close, and insert the handgrip 23 into the

handgrip 33, sliding it along the inside thereof until it surrounds and embraces the piece of meat to slice.

Once the correct position has been found, one simply has to mutually engage the two half-parts by inserting the pin 41 into the opening 34 and the corresponding hole 24. At this point, one can proceed to slice the meat by sliding a knife in the space between the two teeth and positioning it, as preferred depending on the thickness of the slice one wishes to obtain.

During the slicing operation, the piece of meat remains unified and even if the thread which trussed it is removed, it does not open up or break and/or crumble therefore the slices obtained are regular, uniform and round.

Once the slicing is finished, the user can easily transfer the sliced roast, in a block, from the cutting board to a serving plate, keeping it whole, even if it is hot, without any problems or difficulties.

Lastly, to store the tool, the user simply has to release the hook and slide the handgrip 23 off the handgrip 33, wash the two half-parts, by hand or in a dishwasher, and release, on each half-part, the clamping element 26 and the securing element 36, and then close back up the two half-parts and store them in a drawer.

Thus the present invention achieves the aims set.

The gripping tool for meat in question features great ease of use and an excellent grip on the meat, thereby allowing regular and uniform slices to be cut.

Furthermore, the gripping tool for meat offers the user a firm hold on the meat without the need to exert force since it can be gripped by hand but also remains in position on its own, allowing the user to use both hands to slice the meat.

Advantageously, the gripping tool is able to hold the meat effectively without piercing it or ruining it, as happens with the use of large forks in the commonly known technique. Furthermore, the tool is able to house blocks of meat of any size since the distance between the teeth of the two half-parts is adjustable: an impossible condition with the tongs currently available on the market.

A further advantage of the tool in question is that the said tool allows the user to slice the meat easily and without problems, even when it is very hot, without having to touch it, a very difficult situation with the instruments used in the commonly known technique. Furthermore, with the tool in question, it is possible to take a scalding block of meat, such as a boiled piece, from inside a pan full of liquid, without running the risk of burns, and take it conveniently and effortlessly to a cutting board to slice it.

In addition to the above, the gripping tool for meat according to the present invention proves very practical to wash, since the two half-parts are mutually separate and separable, and can also be put in a dishwasher without occupying much space since the two half-parts fold up, in addition to the fact that it can be stored in a drawer with extremely contained overall dimensions.

A further advantage is due to the fact that the gripping tool for meat proves easy to manufacture and works well.

Naturally, further modifications or variants may be applied to the present invention while remaining within the scope of the invention that characterises it.

## Claims

1. A gripping tool for meat **characterised by** the fact that the said tool is essentially constituted of a couple of half parts (2 and 3) envisaged to couple together so as to create a space in which to house a block of meat which must be sliced, wherein the first half part (2) is essentially composed of:
- a first prop (20), envisaged to house a plurality of equidistant teeth (21), with one end secured irremovably to the prop (20) and the other free end slightly arched at the end part thereof in order not to make a hole in the work surface to better adhere to the conformation of the meat,
- a first support (22) connected to the first prop (20) on the extension of the two teeth (21),
- a handgrip (23), engaged in a rotary fashion with the first prop (20) and composed of a section of a hollow tubular element and featuring a series of holes (24), located at equal intervals from one another, and a second half part (3) essentially composed of:
- a second prop (30), envisaged to house a plurality of equidistant teeth, with one end secured irremovably to the prop (30) and the other, free, end slightly arched,
- a small support (32) connected to the second prop (30), also on the extension of the two teeth (31),
- a handgrip (33), engaged in a rotary fashion to the second prop (30) and consisting of a section of a hollow tubular element whose section is large enough to house the handgrip (23), with an opening (34),
- a hook (40), located on the handgrip (33) and equipped with a pin (41) which is envisaged to enter the opening (34) until it intercepts and enters a hole (24) in the first handgrip (23) to mutually secure the two half parts (2 and 3),
- a strike plate (37), present on the handgrip (33), whose task is to house the extension of the teeth, which rests therein, so as to mutually and orthogonally join the second prop (30) and the handgrip (33) by means of the securing element (36), the said gripping tool being designed to operate by switching from a resting condition, in which it is inactive, the two half parts are mutually separate and featuring the teeth located parallel to the handgrip, to a first operational condition, in which the two half parts are mutually secured, and then to a second operational condition, in which a piece of meat to slice is held by the tool.

2. A gripping tool for meat according to claim 1, **characterised by** the fact that the said handgrip (23) is connected to the first prop (20) by means of a hinge (25) which allows the first half part (2) to have a very contained overall size when it is in the resting condition, since the teeth (21) are arranged parallel to the handgrip while when the said first half part (2) is in the operational condition the teeth (21) are located orthogonally with respect to the said handgrip, since the orthogonal position is maintained by the presence of a clamping element (26) which secures between them, locking their first support (22) and the handgrip (23).

3. A gripping tool for meat according to claim 1, **characterised by** the fact that the said handgrip (33) is connected to the second prop (30) via a hinge (35) which permits the second half part (3) to have a very contained overall size when it is in the resting condition since the teeth (31) are arrange parallel to the said handgrip while when the said second half part (3) is in the operational condition, the teeth (31) are located orthogonally with respect to the handgrip since the orthogonal position is obtained due to the presence of a securing element (36) which engages between them, blocking their small support (32) and the handgrip (33).

4. A gripping tool for meat according to claim 1, **characterised by** the fact that the said tool is equipped with a securing unit designed to lock any possible movement of the hook (40) when the tool is in the operational condition.

5. A gripping tool for meat according to claim 1, **characterised by** the fact that the said tool is made of steel, aluminium or even a suitably resistant plastic material.
